# FASCICULE DE BREVET EUROPEEN

(11) **EP 0 383 688 B1**
(45) Date de publication et mention de la délivrance du brevet: **29.12.1993**
(21) Numéro de dépôt: 90400411.6
(22) Date de dépôt: 14.02.1990
(51) Int. Cl.: B60K 41/22, F16H 63/46, F16H 63/42

(54) **Dispositif de détection d'un rapport engagé d'une boîte de vitesses manuelle associé à une timonerie d'un système de manoeuvre d'un embrayage automatique**
Vorrichtung zum Detektieren des geschalteten Ganges eines Handschaltgetriebes, gekoppelt mit einem Schaltmechanismus für eine automatische Kupplung
Manual gearbox ratio-detecting device associated with a linkage of a control system for an automatic clutch

(30) Priorité: 17.02.1989 FR 8902077
(43) Date de publication de la demande: 22.08.1990
(73) Titulaire: VALEO, 75848 Paris Cédex 17 (FR)
(72) Inventeur: Grunberg, Pierre, F-75019 Paris (FR); Pankowiak, Christian, F-93400 Saint-Ouen (FR); Taquoy, Alain, F-02160 Beaurieux (FR)
(74) Mandataire: Gamonal, Didier

(56) Documents cités:
- EP-A- 0 116 815
- EP-A- 0 186 573
- EP-A- 0 189 338
- FR-A- 2 559 719
- GB-A- 2 075 621

## Description

La présente invention concerne un dispositif de commande d'une boîte de vitesses à rapports étagés, notamment pour véhicules automobiles, comportant une timonerie destinée à piloter un système de manoeuvre automatique d'un embrayage associé à cette boîte de vitesses, selon le préambule de la revendication 1 et tel que décrit dans le document EP-A-0189 338 et ses correspondants US-A-4 723 642 et FR-A-2 575 707.

Une telle timonerie, décrite également dans le document WO/A/90/04122 publié le 19.4.1990 et constituant une demande de brevet européen dont le contenu doit être considéré comme compris dans l'état de la technique en ce qui concerne le critère de nouveauté de l'objet revendiqué, est propre également à actionner des moyens de passage et de sélection des vitesses pour manoeuvre de pignons baladeurs que présente la boîte de vitesse. En outre, il est prévus des moyens de détection de seuil d'effort exercé sur la timonerie, un premier détecteur analogique de position relié aux moyens de passage et sensible aux informations de passage appliquées au levier de commande que présente en amont la timonerie, ainsi qu'un circuit de traitement et de commande pour, d'une part, activer le système de manoeuvre automamtique de l'embrayage et, d'autre part, traiter les informations reçues par lesdits moyens de détection de seuil d'effort et par le premier détecteur analogique de position.

Dans ledit document, on peut détecter si une vitesse paire ou impaire est engagée, cet état de parité étant représentatif de la position des moyens de passage des vitesses, qui varient selon que ces moyens sont dans l'une ou dans l'autre de positions limites, un tel dispositif étant constitué par un élément formant came fixé sur un arbre de passage et actionnant dans lesdites positions limites deux palpeurs commandant des contacts à ouverture reliés au circuit de traîtement. En variante, on utilise un détecteur analogique de position constitué par un potentiomètre.

Un tel dispositif indique si une vitesse paire ou impaire est engagée mais n'indique pas laquelle, c'est-à-dire le niveau sur lequel se trouve les moyens de sélection.

Il est également connu, par le document "Automotive Engineering" d'octobre 1984, un dispositif indiquant le rapport engagé par l'intermédiaire d'un détecteur du rapport de démultiplication de la boîte, constitué par au moins deux capteurs de vitesse de rotation, l'un sensible à la vitesse de rotation de l'arbre de sortie de la boîte de vitesse, l'autre à la vitesse de rotation de l'arbre d'entrée de la boîte de vitesses.

Un tel dispositif nécessite, pour l'implantation des capteurs, des modifications du carter de la boîte de vitesse entraînant des opérations d'usinage supplémentaires de ceux-ci.

En outre, un tel dispositif n'indique le rapport engagé à un instant donné que si la boîte est tournante car les informations sont prises sur des éléments tournants.

Or il est indispensable, pour une bonne gestion de l'automatisme de l'embrayage, de connaître à tout moment le rapport engagé, boîte tournante ou non tournante. En effet, une vitesse peut être engagée lorsque le véhicule est immobile, et il convient par exemple d'avertir le conducteur lorsque celui-ci démarre en troisième vitesse.

Le but de la présente invention consiste à répondre à ce besoin et donc à améliorer la gestion de l'automatisme de l'embrayage.

Ce problème est résolu, conformément à la présente invention, par la partie caractérisante de la revendication 1.

On appréciera que lesdits détecteurs analogiques de position sont faciles à monter et d'un réglage plus aisé qu'un dispositif à came et à palpeurs, selon l'art antérieur, à fonctionnement discontinu contrairement au détecteur de l'invention à fonctionnement continu. Grâce à l'invention, il est possible de distinguer les rapports de vitesses ayant une même parité, par exemple la première vitesse et la troisième vitesse. Il est possible de désengager l'embrayage lorsque le levier de commande est sollicité en translation vers une position limite inoccupée ou lorsqu'il se trouve sur la ligne neutre de sélection, ainsi que de permettre la séquence d'embrayage lorsqu'une vitesse est vue engagée.

Selon un mode de réalisation particulier de l'invention, les détecteurs analogiques de position sont constitués par deux potentiomètres, dont les curseurs se déplacent en réponse à une rotation ou à une translation du levier de commande sur des résistances disposées selon des axes appropriés, la tension délivrée par les potentiomètres étant représentative de la position du levier de commande.

On appréciera que cette disposition est simple, les curseurs pouvant être entrainés respectivement à partir d'une fourchette permettant d'activer les moyens de sélection et d'un flasque permettant d'activer les moyens de passage.

La description qui va suivre en regard du dessin annexé fera mieux comprendre comment l'invention peut être réalisée.

La figure unique est un schéma synoptique en perspective d'un dispositif de commande d'une boîte de vitesses pour véhicules auotmobiles, associée à un embrayage à sec piloté par un système de manoeuvre automatique.

La figure représente, de façon schématique, une timonerie de manoeuvre 10 comportant en amont un levier de commande 11, monté oscillant sur une rotule 12 par rapport à un châssis fixe 13 et commandant en aval des moyens de passage et de sélection des vitesses sachant, qu'un passage de vitesse correspond, par exemple, à un passage de la première à la deuxième vitesse, tandis qu'une sélection de vitesses correspond, par exemple, à un déplacement de la ligne de vitesses 1,2 à la ligne de vitesses 3,4. Ici, lesdits moyens de passage et de sélection comportent un arbre de commande 14 d'une boîte de vitesses 55. L'arbre 14 est susceptible d'être commandé en rotation selon les flèches RR' entre des positions limites de passage de vitesses par l'intermédiaire d'un flasque transversal 15 à l'extrémité d'un bras 16 duquel est articulé en 17 une première tringle 18 déplacée axialement sur la ligne L sous l'influence du levier 11 lorsqu'il est sollicité dans les sens des flèches FF'.

L'arbre 14 est susceptible également d'être commandé en translation selon le sens T, pour sélectionner une ligne de passage, par l'intermédiaire d'une gorge 19, qu'il présente, pour réception d'un organe de manoeuvre 20, ici une fourchette, oscillant sous l'action rotative d'une seconde tringle 21 selon les flèches rr' de laquelle il est solidaire ; tringle 21 guidée à ses extrémités par des paliers fixes 22,23 du châssis et actionnée par sollicitation du levier 11, selon le sens des flèches ff'. De manière usuelle, l'arbre 14 est propre à manoeuvrer des pignons baladeurs que présente la boîte de vitesses pour définition des rapports, lesdits pignons faisant partie d'ensembles de synchronisation et de crabotage, la boîte de vitesses étant dite boîte de vitesses à commande manuelle.

A cette timonerie 10 sont associés des moyens de détection de seuil d'effort 24, comme décrit dans le document FR-A-2575707 (US-A-4 723 642), adaptés à fournir des informations à un circuit électronique de traitement et de commande 53, ici sous forme d'un calculateur, tel qu'un microprocesseur, alimenté électriquement, en vue de piloter électroniquement un système de manoeuvre automatique 25 apte à commander en désengagement ou en réengagement un embrayage (schématisé en 26), de telle sorte à permettre tout changement de vitesses et de démarrer le véhicule.

Pour mémoire, on rappellera que les moyens 24 sont un élément déformable de la timonerie transparent pour le conducteur et détectant une volonté de manoeuvre de celui-ci. Ces moyens 24 comportent un levier déformable 11, dit levier de commande polarisé, lequel comprend un tronçon amont 11A, destiné à être manoeuvré par un usager, et un tronçon aval 11B monté pivotant sur le châssis. Les tronçons 11A et 11B admettent un débattement angulaire relatif grâce à une articulation 27 orientée suivant le sens de sélection. Le tronçon amont 11A comporte un doigt 28 qui pénètre à l'intérieur d'un logement 29 porté par le tronçon aval 11B.

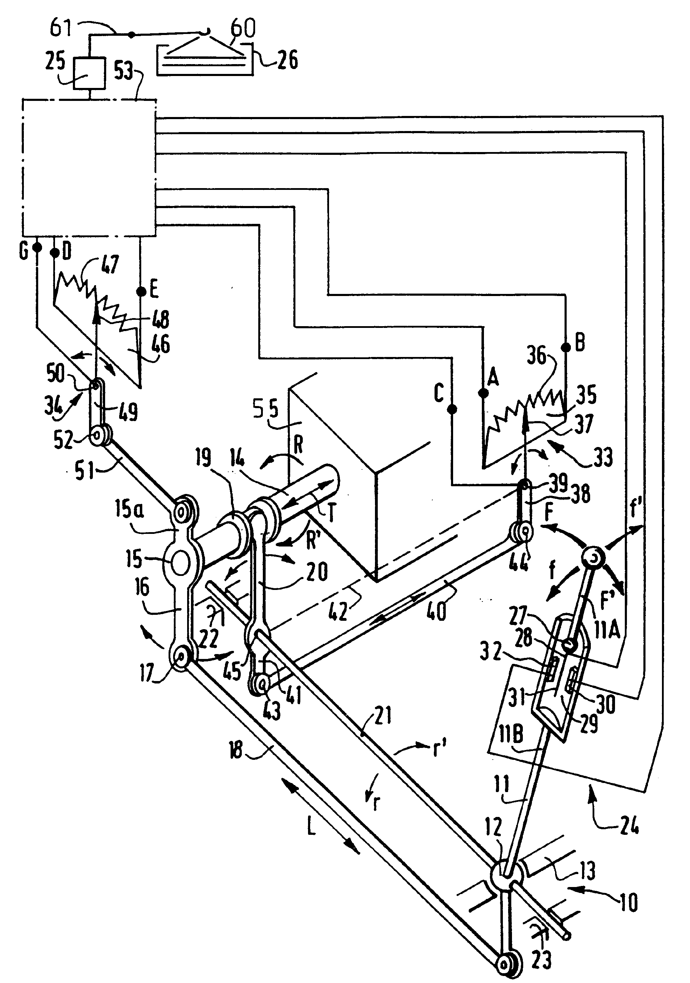

Le levier 11 est donc cassé et porte donc les moyens 24 adaptés à prendre un état représentatif de la sollicitation de ce levier, qui est différent selon que celui-ci est sollicité en l'un ou l'autre de deux sens opposés de référence. Ces sens de référence sont situés dans le plan de la figure 1 et sont notés F et F'.

Ces moyens 24 comportent deux contacts reliés à trois plots 30, 31 et 32 formant conjointement un interrupteur à trois fils adapté à établir deux contacts 30-31 et 31-32. Le plot 31 est porté par le doigt 28 du tronçon amont 11A tandis que les plots 30 et 32 sont disposés dans le logement 29 de façon symétrique par rapport au plot 31.

Les tronçons 11A et 11B sont attelés élastiquement par des moyens les rappelant en une configuration neutre d'alignement. L'interrupteur à plots 30 à 32 peut prendre trois états selon que le tronçon amont subit un effort faible ou nul (les plots sont tous séparés), un effort dans le sens de la flèche F' (le contact 32/31 est établi), ou un effort dans le sens de la flèche F (le contact 31/30 est établi).

Pour mémoire, on rappellera également que l'embrayage 26 est par exemple un embrayage à sec à diaphragme 60, ledit diaphragme prenant appui sur un couvercle rapporté à fixation sur un plateau de réaction, pour sollicitation d'un plateau de pression, solidaire en rotation du couvercle, et serrage d'un disque de friction, solidaire en rotation de l'arbre d'entrée de la boîte de vitesses, entre lesdits plateaux de réaction et de pression. Lorsque le disque de friction est serré pleinement entre lesdits plateaux, l'embrayage est engagé, dans le cas contraire il est désengagé, la commande étant réalisée par l'intermédiaire d'un moteur électrique appartenant au dispositif 25 doté d'un ressort compensateur, commandé par le calculateur 53, actionnant une transmission dont fait partie une fourchette de débrayage 61 agissant sur une butée de débrayage pour manoeuvre du diaphragme 60. Pour plus de précision, on se reportera par exemple au susmentionné document "automotive engineering". En variante le circuit 53 peut piloter un vérin pour la commande de l'embrayage.

Le dispositif de commande comporte également un premier détecteur analogique de position 34 relié aux moyens de passage et sensible aux informations de passage appliquées au levier de commande 11. Le circuit 53 permet d'activer le système automatique de débrayage 25 et, d'autre part, de traiter les informations reçues par lesdits moyens de détection de seuil d'effort 24 et par le premier détecteur analogique de position 34.

Selon l'invention, le dispositif de commande comporte un deuxième détecteur analogique de position 33, relié aux moyens de sélection et sensible aux informations de sélection.appliquées au levier de commande, ledit second détecteur analogique de position étant relié audit circuit de traitement et de commande 53, tandis que la timonerie de commande 10 comporte une fourchette 20 engagée dans la gorge 19 de l'arbre de commande 14 pour déplacement en translation dudit arbre, le deuxième détecteur analogique de position 33 étant entraîné à partir de ladite fourchette.

Ces détecteurs analogiques de position 33 et 34 sont respectivement sensibles, et cela quel que soit l'état de la boîte, d'une part à la rotation rr' de la tringle 21 actionnée par le levier 11 lorsqu'il est sollicité dans le sens des flèches ff' et provoquant ainsi la translation T de l'arbre 14, mouvement correspondant à la sélection des vitesses et, d'autre part, au déplacement longitudinal L de la tringle 18 actionnée également par le levier 11 lorsqu'il est sollicité dans le sens des flèches FF' et provoquant ainsi la rotation RR' de l'arbre 14, mouvement correspondant au passage des vitesses. Ils sont reliés électriquement au circuit 53 tout comme les moyens 24, dont les plots 30 à 32 sont connectés au circuit 53 par trois lignes, tout comme les détecteurs 33 et 34.

Ce circuit électronique 53 est adapté, en fonction de la position des détecteurs 33,34 et des moyens de détection de seuil d'effort 24, à activer le système 25 de manoeuvre automatique de l'embrayage 26 en vue d'un désengagement de ce dernier préalablement à un passage de vitesse, suivi d'un réengagement dudit embrayage 26 quand une autre vitesse est engagée. On notera que le circuit 53 est donc adapté à activer le système 25 en sorte de désengager ce dernier lorsque le levier 11 est sollicité en translation vers une position limite inoccupée ou lorsqu'il se trouve sur la ligne neutre de sélection.

Ainsi, les moyens 24 permettent de détecter la volonté de désengagement de l'embrayage et les détecteurs 33,34 la vitesse (ou le rapport) engagée, en sorte qu'il est possible, grâce notamment au circuit 53, de bâtir une stratégie, permettant de distinguer un démarrage normal ou exceptionnel en première vitesse par rapport à une tentative le démarrer sur un rapport de boîte de vitesse plus élevée qui produira un signal d'alarme ou de mauvaise utilisation du véhicule. On notera qu'il est possible également d'améliorer le confort de l'usager, le passage par exemple de la troisième à la deuxième vitesse s'effectuant avec un temps de réembrayage plus long que celui du passage de la deuxième à la troisième vitesse, grâce au dispositif, selon l'invention, qui permet de connaître les rapports engagés.

Selon un mode de réalisation de l'invention (non représenté) les potentiomètres 34 et 33 sont disposés à l'intérieur même de la boîte de vitesses 55 en bout de l'arbre de commande 14. Selon un second mode de réalisation (non représenté), les deux potentiomètres 34 et 33 sont mécaniquement groupés sous forme d'un capteur unique au niveau de l'extrémité libre de l'arbre 14 et sont sensibles respectivement à un déplacement en rotation en translation dudit arbre. En cablant ces potentiomètres en parallèle, le nombre de fils est alors réduit à quatre.

Bien entendu, le potentiomètre 34 peut être remplacé, par exemple, par un détecteur analogique de position comportant un capteur à effet Hall ou un capteur optique. De même, les moyens de passage et de sélection de vitesses peuvent comporter deux arbres différents, l'un étant mobile en rotation et l'autre en translation.

Ici, le second détecteur 33 est constitué par un second potentiomètre 35 avec une résistance 36 aux bornes A,B de laquelle est appliquée une tension de référence, résistance sur laquelle est susceptible de se déplacer un curseur 37 en réponse à une action selon le sens des flèches ff' du levier 11 correspondant à une translation T de l'arbre de commande 14, la différence de potentiel entre la borne C du curseur et la borne A ou B étant représentative de la position du curseur 37 qui est actionné angulairement en déplacement par un bras 38 qui lui est solidaire, autour d'un axe fixe 39. Ce bras 38 constitue un élément d'un parallélogramme déformable dont un deuxième élément est une tringle d'entraînement 40, un troisième élément est un bras de commande 41, et le quatrième élément 42 est une ligne fictive. Un tel parallélogramme est articulé autour des points 39, 43, 44 et 45, les points d'articulation 43 et 44 étant mobiles, les points 39 et 45 étant fixes. Le point 45 se confond en fait avec le point de solidarisation de la tringle à action rotative 21 avec l'organe de manoeuvre ou fourchette 20, le bras 41 défini ci-dessus constituant un prolongement de la fourchette 20 au-delà du point 45. La ligne 42 passe par les points 39 et 45.

Le premier détecteur analogique de position 34 est constitué par un premier potentiomètre 46 doté d'une résistance 47 aux bornes D,E desquelles est appliquée une tension et sur laquelle se déplace un curseur 48 en réponse à une action selon le sens des flèches FF' du levier 11 correspondant à une rotation RR' de l'arbre 14. La différence de potentiel entre la borne G du curseur 48 et la borne D ou E étant représentative de la position dudit curseur 48 qui est actionné angulairement, par un bras 49, qui le prolonge autour d'un point fixe 50, bras 49 lui-même actionné par un mouvement longitudinal d'un second bras 51 relié à l'une de ses extrémité audit bras 49 par l'articulation 52 et à son autre extrémité au prolongement 15a du flasque 15 actionné angulairement comme ci-dessus décrit, par l'arbre 14 duquel il est solidaire, sous l'action longitudinale suivant L de la tringle 18 répondant au sens d'effort selon les flèches FF' du levier 11.

## Revendications

1. Dispositif de commande d'une boîte de vitesses (55) à rapports étagés, notamment pour véhicules automobiles, comportant une timonerie de commande (10), comprenant en amont un levier de commande (11) et propre, d'une part, à piloter un système de manoeuvre automatique (25) d'un embrayage (26) associé à cette boîte de vitesses, et, d'autre part, à actionner des moyens de passage et de sélection de vitesses comportant un arbre de commande (12) pour manoeuvre d'au moins un pignon baladeur que présente la boîte de vitesse, des moyens de détection de seuil d'effort (24) exercés sur la timonerie (10), un premier détecteur analogique de position (34) relié a l'arbre de commande (14) et sensible à la rotation dudit arbre (14) sous l'action du levier de commande (11), et un circuit electronique de traitement et de commande (53) pour, d'une part, activer ledit système automatique de manoeuvre et, d'autre part, traiter les informations reçues par ledits moyens de détection de seuil d'effort (24) et par le premier détecteur analogique de position (34), caractérisé en ce qu'il comporte un deuxième détecteur analogique de position (33) relié aux moyens de sélection et sensible aux informations de sélection appliquées au levier de commande (11), ledit second détecteur (33) étant relié audit circuit de traitement et de commande (53), en ce que la timonerie de commande (10) comporte une fourchette (20) engagée dans une gorge (19) de l'arbre de commande (14) pour déplacement en translation dudit arbre et en ce que le deuxième détecteur analogique de position (33) est entraîné à partir de ladite fourchette (20).

2. Dispositif de commande selon la revendication 1, dans lequel le deuxième détecteur analogique de position (33) consiste en un potentiomètre doté d'un curseur (37), caractérisé en ce que ledit curseur (37) est actionné par un bras (38), dit bras d'actionnement, constituant un premier élément d'un parallélogramme déformable articulé, dont un deuxième élément est une tringle d'entraînement (40) et le troisième élément un bras de commande (41) solidaire de la fourchette (20).

3. Dispositif de commande selon la revendication 2, caractérisé en ce que le bras de commande (41) constitue un prolongement de la fourchette (20) au-delà d'un point (45) se confondant avec le point de solidarisation de la fourchette (20) avec une tringle (21) à action rotative propre à être actionnée par le levier de commande (11).

4. Dispositif de commande selon la revendication 3, caractérisé en ce que les points d'articulation (43,44) de la tringle d'entraînement (40), respectivement avec le bras de commande (41) et avec le bras (38) d'actionnement, sont mobiles.

5. Dispositif de commande selon la revendication 4, caractérisé en ce que le curseur (37) est solidaire de son bras (38) d'actionnement et est actionné angulairement autour d'un axe fixe (39) en sorte que le quatrième élément du parallélogramme est une ligne fictive (42) passant par ledit point (39) et par le point de solidarisation (45) de la fourchette (20) avec sa tringle (21).

6. Dispositif de commande selon l'une quelconque des revendications 1 à 5, dans lequel le premier détecteur analogique de position (34) consiste en un potentiomètre doté d'un curseur (48), caractérisé en ce que ledit curseur (48) est actionné angulairement par un bras (49), lui-même actionné longitudinalement par un second bras (51) relié à un prolongement (15a) d'un flasque (15) commandant en rotation l'arbre de commande (14) et articulé à une première tringle (18) à action axiale actionnée par le levier de manoeuvre (11).

## Patentansprüche

1. Steuerungsvorrichtung für ein Getriebe (55) mit abgestuften Gängen, insbesondere für Kraftfahrzeuge, enthaltend ein Betätigungsgestänge (10), welches oberhalb einen Schalthebel (11) aufweist und dazu geeignet ist, einerseits einen automatischen Schaltmechanismus (25) einer mit diesem Getriebe verbundenen Kupplung (26) vorzusteuern und andererseits Gangwahl- und Umschaltmittel zu betätigen, enthaltend eine Antriebswelle (12) für die Betatigung wenigstens eines am Getriebe vorhandenen Schieberades, Mittel zur Erfassung der auf das Gestänge (10) einwirkenden Kraftschwelle (24), einen ersten Analog-Stellungsgeber (34), der mit der Antriebswelle (14) verbunden ist und auf die Rotation der genannten Welle (14) unter Einwirkung des Schalthebels (11) anspricht, und einen elektronischen Verarbeitungs- und Steuerkreis (53), um einerseits das genannte automatische Schaltsystem zu betätigen und andererseits die Informationen zu verarbeiten, die von den genannten Kraftschwellen-Erfassungsmitteln (24) und dem ersten Analog-Stellungsgeber (34) empfangen werden, **dadurch** **gekennzeichnet,** daß sie einen zweiten Analog-Stellungsgeber (33) enthält, der mit den Wahlmitteln verbunden ist und auf die am Schalthebel (11) angreifenden Wahlinformationen anspricht, wobei der genannten zweite Geber (33) mit dem genannten Verarbeitungs- und Steuerkreis (53) verbunden ist, daß das Betätigungsgestänge (10) eine Gabel (20) aufweist, die in eine Nut (19) der Antriebswelle (14) eingreift, um eine translatorische Bewegung der genannten Welle zu bewirken, und daß der zweite Analog-Stellungsgeber (33) von der genannten Gabel (20) aus angetrieben wird.

2. Steuerungsvorrichtung nach Anspruch 1, bei der der zweite Analog-Stellungsgeber (33) aus einem Potentiometer besteht, welches mit einem Gleitkontakt (37) versehen ist, **dadurch** **gekennzeichnet,** daß der genannte Gleitkontakt (37) durch einen Arm (38), den sogenannten Betätigungsarm, betätigt wird, der ein erstes Element eines verformbaren Gelenkparallelogramms bildet und dessen zweites Element eine Antriebsstange (40) und dessen drittes Element einen fest mit der Gabel (20) verbundenen Betätigungsarm (41) bildet.

3. Steuerungsvorrichtung nach Anspruch 2, **dadurch** **gekennzeichnet,** daß der Betätigungsarm (41) eine Verlängerung der Gabel (20) über einen Punkt (45) hinaus bildet, der sich mit dem Befestigungspunkt zwischen der Gabel (20) und einer Drehstange (21) deckt, die durch den Schalthebel (11) betätigt werden kann.

4. Steuerungsvorrichtung nach Anspruch 3, **dadurch** **gekennzeichnet,** daß die Gelenkpunkte (43, 44) der Antriebsstange (40) zum Bedienungsarm (41) bzw. zum Betätigungsarm (38) beweglich sind.

5. Steuerungsvorrichtung nach Anspruch 4, **dadurch** **gekennzeichnet,** daß der Gleitkontakt (37) fest mit seinem Betätigungsarm (38) verbunden ist und winklig um eine feststehende Achse (39) herum bewegt wird, so daß das vierte Element des Parallelogramms eine fiktive Linie (42)ist, die durch den genannten Punkt (39) und durch den Befestigungspunkt (45) zwischen der Gabel (20) und der Stange (21) verläuft.

6. Steuerungsvorrichtung nach einem der Ansprüche 1 bis 5, bei der der erste Analog-Stellungsgeber (34) aus einem mit Gleitkontakt (48) versehenen Potentiometer besteht, **dadurch** **gekennzeichnet,** daß der genannte Gleitkontakt (48) winklig durch einen Arm (49) betätigt wird, der seinerseits in Längsrichtung durch einen zweiten Arm (51) betätigt wird, welcher mit einer Verlängerung (15a) eines Flanschs (15) verbunden ist, der die Drehbewegung der Antriebswelle (14) steuert und gelenkig mit einer ersten Stange (18) verbunden ist, die in axialer Richtung wirkt und durch den Schalthebel (11) betätigt wird.

## Claims

1. A control system for a gearbox (55) with stepped gear ratios, in particular for motor vehicles, comprising a control linkage (10), which includes at its upstream side a control lever (11) and which is adapted, firstly to control an automatic actuating system (25) for a clutch (26) associated with the said gearbox, and secondly to actuate gear shift and speed selecting means which include a control shaft (12) for manoeuvring at least one shift wheel which is included in the gearbox, force threshold detecting means (24) acting on the linkage (10), a first analog position detector (34) which is connected to the control shaft (14) and which is responsive to the rotation of the said shaft (14) under the action of the control lever (11), and an electronic processing and control circuit (53), firstly for activating the said automatic actuating system, and secondly for processing the signals which are received by the said force threshold detecting means (24) and by the first analog position detector (34), characterised in that it includes a second analog position detector (33) which is connected to the selecting means and which is responsive to the selection signals applied to the control lever (11), the said second detector (33) being connected to the said processing and control circuit (53), in that the control linkage (10) includes a fork (20) which is engaged in a groove (19) of the control shaft (14) for displacement of the said shaft in translation, and in that the second analog position detector (33) is driven from the said fork (20).

2. A control system according to Claim 1, in which the second analog position detector (33) consists of a potentiometer having a cursor (37), characterised in that the said cursor (37) is actuated by an arm (38), referred to as an actuating arm and constituting a first element of an articulated deformable parallelogram, a second element of which is a drive rod, while the third element is a control arm (41) fixed to the fork (20).

3. A control system according to Claim 2, characterised in that the control arm (41) constitutes an extension of the fork (20) beyond a point (45) which is coincident with the point at which the fork (20) is fixed to a rotatable rod (21) which is arranged to be actuated by the control lever (11).

4. A control system according to Claim 3, characterised in that the points (43, 44) at which the drive rod (40) is articulated with the control arm (41) and with the actuating arm (38), respectively, are movable.

5. A control system according to Claim 4, characterised in that the cursor (37) is fixed to its actuating arm (38) and is actuated circumferentially about a fixed axis (39), in such a way that the fourth element of the parallelogram is a notional line (42) passing through the said point (39) and through the point (45) at which the fork (20) is fastened to its rod (21).

6. A control system according to any one of Claims 1 to 5, in which the first analog position detector (34) consists of a potentiometer having a cursor (48), characterised in that the said cursor (48) is actuated circumferentially by an arm (49), which is itself actuated longitudinally by a second arm (51) connected to an extension (15a) of a wheel (15), which governs the rotation of the control shaft (14) and which is articulated to a first rod (18) arranged for axial action and actuated by the actuating lever (11).
